# EUROPEAN PATENT SPECIFICATION

(11) **EP 3 794 959 B1**
(45) Date of publication and mention of the grant of the patent: **26.08.2026**
(21) Application number: 19000426.7
(22) Date of filing: 23.09.2019
(51) Int. Cl.: A23L 21/25, A23L 29/30

(54) **METHOD AND PROCESS FOR PREVENTING HONEY CRYSTALLIZATION**
VERFAHREN UND VORGANG ZUR VERHINDERUNG DER HONIGKRISTALLISATION
PROCÉDÉ ET PROCESSUS POUR EMPÊCHER LA CRISTALLISATION DU MIEL

(43) Date of publication of application: 24.03.2021
(73) Proprietor: Universitatea Stefan cel Mare Suceava - Romania, 720229 Suceava (RO)
(72) Inventor: AMARIEI, Sonia, Jud. Suceava (RO); GUTT, Gheorghe, Jud. Suceava (RO); NOROCEL, Liliana, Jud. Suceava (RO)

(56) References cited:
- EP-A1- 0 834 516
- FR-A1- 2 664 472
- US-A- 1 987 893
- US-A1- 2005 129 836
- US-A1- 2015 189 899
- ZAMORA M C ET AL: "Determination of water activity change due to crystallization in honeys from Argentina", FOOD CONTROL, BUTTERWORTH, LONDON, GB, vol. 17, no. 1, 1 January 2006 (2006-01-01), pages 59 - 64, XP024961692, ISSN: 0956-7135, [retrieved on 20060101], DOI: 10.1016/J.FOODCONT.2004.09.003

## Description

### FIELD OF THE INVENTION

The invention relates to the food field and especially to the beekeeping field interested in preventing honey crystallization and preserving the textural properties of honey from production and throughout its storage period.

### BACKGROUND OF THE INVENTION

The invention relates to a method and a food process for preventing the crystallization of honey over time in order to preserve the texture corresponding to fresh honey. According to the Directive 2001/110/EC, the honey is defined as natural sweet substance produced by Apis mellifera bees. Honey has a very diverse composition due to its geographical and botanical origin. Honey contains about 80% sugars (fructose, glucose, maltose, sucrose, isomaltose, melezitosis, raffinose, erlose, turanoose, trehalose), less than 20% water, organic acids (acetic, butanoic, formic, citric, succinic, lactic, malic, pyroglutamic, gluconic and a large number of aromatic acids), amino acids (proline, aspartic acid and asparagine, alanine, serine, methionine, tyrosine, leucine, lysine, arginine, histidine, ornithine, isoleucine, valine, etc.), the proportion of these components depending on the origin of honey (nectar of plants or from secretions of living parts of plants or excretions of plant-sucking insects on the living parts of plants), mineral salts (containing calcium, iron, zinc, potassium, phosphorus, magnesium, selenium, chromium and manganese), vitamins (from group B such as riboflavin, niacin, folic acid, pantothenic acid, pyridoxine and vitamin C), enzymes (diastase, invertase, glucosoxidase, catalase). The two main sugars, fructose (30-44%) and glucose (25-40%), by their ratio mainly influence the ability of the honey to crystallize. Glucose is the one that tends to crystallize due to its low solubility in water, while fructose, 4.4 times more soluble in water, remains dissolved in solution. Only fresh honey has the highest nutritional, medical and texture values. All these values decrease with the passage of time, a negative factor is the advanced crystallization of honey, which manifests itself on both the taste and its texture and color.

The measures known and used at the present time in order to maintain the characteristics of fresh honey as much as possible are to keep the honey at a temperature below 10°C when the viscosity of the honey increases and the crystallization is slowed down or to temperatures above 25°C, keeping it in the dark and using containers tightly sealed.

With all these measures, the most important organoleptic characteristics of honey change over time. Today, in order to prevent advanced crystallization, ultrasonic and microwave treatments, filtration and ultrafiltration are used. All these measures improve only to a small extent and only for a limited time the textural quality of honey.

Concerns to prevent honey crystallization have materialized in many patents over time.

It is known U.S. Patent No.1,890,180, which refers to the process of preventing honey crystallization by mixing in any order and by any suitable means about seventy three percent by weight honey with approximately fifteen percent ground roasted peanuts, twelve percent oil of green peanuts. The product made honey does not crystallize, but this product is no longer fulfills the criteria to be honey, according to international regulations, and peanuts is a product with allergenic potential.

The main object of US Patent No.1,987,893 , is to produce honey having a smooth, firm, fondant -like consistency which can be obtained by adding in honey heated to 75°F of about 20% sugars, crystallized honey as well as air bubbles which realizes the uniform distribution of crystallization nuclei. Honey has a strong hygroscopic character, which causes that during the opening of the containers or of the mixing process, honey absorbs moisture quickly from the air (the relative humidity of the air being about 60%), especially during a slow mixing, which determines modification of the chemical stability of honey. Heating and maintaining honey at temperatures above 35°C results in an increase of HMF (hydroxymethyl furfural) which should not exceed 40mg/kg, in accordance with Article 6 (b) of Annex II of the Official Journal of the European Communities.

US Patent 2,856,292 proposes a method of inhibiting crystallization by using an addition of sorbic acid or isobutyric acid. According to Annex II of the Official Journal of the European Communities honey "shall not be added to any food ingredient, including food additives, nor shall any other additions be made other than honey." In the same patent, it is proposed together with the addition of additives and the use of ultrasound generated by magnetostriction oscillator at 9 kilocycles per second for about 30 minutes, for an efficient method of preventing crystallization. The use of optimized ultrasound treatment allowed the maintenance of quality physical and chemical characteristics and microbiological analysis also showed a lower number of aerobic mesophilic bacteria in honey treated with ultrasound than in thermal processing up to 65°C. There was a significant decrease in both glucosoxidase activity and H₂O₂ production. Conventional heating of honey and ultrasound treatment have had the effect of modifying the antioxidant capacity of some assortments of honey, decreasing the total polyphenol content and increasing the amount of HMF a significant decrease in both glucosoxidase activity and H₂O₂ production. A disadvantage is the high costs of using this process.

Patent Number US 4,529,608 refers to a honey-based product for the elimination of the difficulties caused by the high viscosity of honey. The honey is mixed with corn starch and cyclodextrin, and the homogenized mass is dried at 100°C for 20 minutes. The obtained mass is immediately ground, subjected to drying and mixed with silicic acid. There is a new milling and drying process that can last 10-30 hours. The mixture of ingredients used characterizes a dry product based on honey, but it is not honey, according to international regulations. The processes of heating, drying, grinding, influence the quality of honey due to oxidation reactions, inactivation of enzymes at drying temperature and long drying time, formation of HMF due to processing conditions.

United States Patent, 4,532,143 proposes a spreadable honey composition comprising honey and pectin as a mixture of 5 parts of low-methoxyl pectin per part of high-methoxyl pectin, the total amount of pectin added is in the range of about 0.5% to about 3% by weight of the composition. Pectins are additives with the number E 440 and are part of the class of hydrocolloids. In accordance with REGULATION (EU) NO. 1129/2011 OF THE COMMISSION of 11 November 2011, amending Annex II to Regulation (EC) no. 1333/2008 of the European Parliament and of the Council by establishing a Union list of food additives, Table 1, honey is part of the food products in which the presence of an additive cannot be authorized.

Patent EP 2,477,508B1 presents a method for obtaining liquid honey, without crystals, using honey heated to 10-60°C, a centrifugal process at a centrifugal force of 1000 et 30000 g, the duration of centrifugation of several tens of seconds to 5 hours, by which the glucose crystals formed are removed so that the proportion of glucose is less than 30%, and F/G ≥1.4. By modifying the glucose content, honey is different from the original one whose chemical composition is given by the source of nectar (F/G ratio). The process involves heating, which must be well controlled to prevent the formation of HMF and the reduction of the diastatic index and two operations of centrifugation and filtration which are cumbersome because they involve adequate equipment, for a long time, in which honey comes in contact with the air.

In Patent CN1709159 (A)-2005-12-21, is presented a method of increasing the amount of fructose in honey by inducing the crystallization of glucose and removing 95% of glucose by filtration. The honey obtained no longer has the qualities of the original one, given by the ratio of fructose /glucose, it is in fact a concentrated solution of fructose.

Patent JPH01240156 (A)-1989-09-25 , proposes a process of filtration of honey through a porous membrane of polyethylene, with pores of 0.1-0.3µm, at a temperature of 50° C, at a pressure of 0.5-4kf/cm². The particles that give honey turbidity and fermentation germs are removed. The composition of honey in the two main carbohydrates remains the same; therefore the tendency of crystallization, according to the ratio G/F is kept.

US Patent No. 2,902,370, presents a method of packing honeycombs, in order to prevent or delay honey crystallization. Honeycombs are covered with a pectin film and placed in containers and filled with liquid honey. The use of additives in honey is not authorized.

US2005/129836 A1 discloses the prevention of the crystallisation of honey by the addition to honey of an extender comprising water, an oligosaccharide and corn syrup.

### SUMMARY OF THE INVENTION

The technical problem that the invention solves is the use of a new method, which is defined by the claims, and an appropriate process of preventing long-term crystallization of honey, ensuring that the properties of fresh honey are preserved. For this purpose, trehalose, a non-reducing disaccharide consisting of two glucose units linked to α-1,1 glucoside, is used.

In nature trehalose is found in: animals, plants, insects (bees, butterflies). It is present in mushrooms (it is called mushroom sugar), baker's yeast, honey. Trehalose is synthesized by yeasts under stress conditions to ensure their survival. In human and herbivorous organisms trehalose is cleaved in glucose under the influence of the trehalase enzyme present in the intestinal mucosa. The role of trehalose on different organisms is multiple and diverse as follows:
In plants, sugars play an energetic and plastic role in tissue formation, but trehalose also plays a role in hormonal signaling, as a primary messenger in transmitting messages. In plants, this saccharide is involved in all their development stages. It also plays an important role in enzymatic activity, photosynthetic activity and a regulatory role in starch accumulation. Recently, it has been found that this sugar plays an important role in the interactions between plants and microorganisms.

In humans and animals, the main function of trehalose is to protect organisms from stress caused by the environment. Trehalose resolves homeostatic imbalance by correcting mitochondrial defects, prevents neural tube defects from occurring at diabetic pregnancy and delays in neuron formation. Trehalose positively influences the thermostability of enzymes, such as α-glucosidase at temperatures of 60 °C.

Trehalose strongly influences the retention and preservation of aromas, leading to a higher stability of phenolic compounds and anthocyanins. Trehalose allows the survival in conditions of complete dehydration for months or years, of several species of bacteria, some fungi, invertebrates, certain plants, until the water is again present, when they resume their metabolism and growth. All these organisms, with tolerance to desiccation, accumulate trehalose.

Trehalose is the main energy source of the bees that release under the action of trehalases the two glucose molecules that provide the energy needs of the flight.

Currently trehalose has various uses, such as:
- Due to its high solubility, high temperature resistance and acid resistance, trehalose has good compatibility with many foods and food ingredients. A sweetener based on trehalose was made for food products (bakery products, dairy products, dressings and sauces, processed fruits, chewing gums, flavors, soups, etc.), drinks (alcoholic and non-alcoholic, instant coffee). As a low glycemic sweetener, trehalose is legally traded in the US, Canada, Japan and other countries. Also, by its dehydrating capacity it is used as a food preservative for fresh foods, but also in frozen state. Due to the easy passage of trehalose in its anhydrous form, it maintains water activity at a very low level and can be used as a food encapsulating agent. At present, trehalose is also used as a parenteral food.
- In medicine, trehalose was combined with hyaluronic acid to create a new artificial tear to treat eye irritation, to protect, hydrate and lubricate the dry eye. It has the role of preservative in various medicinal products. Treatment with trehalose improves the maintenance of the quality of red blood cells in the process of lyophilization and rehydration. Trehalose plays an important role in stabilizing protein structure and thermoprotection of biologically valuable proteins, which is the main reason for their interest in health and longevity.
- In cosmetics, trehalose is used as a moisturizing substance.

The advantages of the method, according to the invention, consist in obtaining honey that does not crystallize in time and which have the organoleptic properties of fresh honey by adding trehalose in extremely small quantities in honey, under labor conditions and low material costs.

The method-related process has the following advantages:
- the addition of trehalose solution in honey can be done by any manufacturer at the place of production without special equipment, much labor and specialized knowledge;
- the addition of trehalose solution in honey is done at the usual temperature, without affecting the enzymatic activity of the product as is the case of heating the honey for the purpose of dissolving the formed crystals;
- preventing the crystallization of honey determines the advanced preservation of the texture elements of the honey, specific to the oral cavity. This aspect is of particular importance especially for children who do not like the presence of honey crystals on the tongue and palate;
- preventing the crystallization has the effect of maintaining the initial color of the honey and recognizing the type of honey after the color, which depends on the floral source of the nectar. The appearance of crystals determines the strong opening of the color of honey compared to the fresh honey due to the crystallization of glucose, of its white color, from the supersaturated solution formed in honey in the 17-20% water;
- during the crystallization, the water content of the liquid phase increases and increases the possibility of honey fermentation and alteration of its properties.

The present invention is defined as follows:
A method for preventing honey crystallization, characterized in that a diglucose is added to honey in a percentage of 0.03% to prevent honey crystallization, wherein said that diglucose is trehalose.

The above method for preventing honey crystallization, wherein for the purpose of adding trehalose to honey, a 2% trehalose solution is made at ambient temperature using pure water as a solvent. In an embodiment of the method, 12-15 ml of 2% trehalose solution are introduced under continuous, slow stirring, for 20 minutes, into one kilogram of honey.

In the above method, the peripheral speed of the stirrer blades is about 2m/min.

An example is described below of the embodiment of invention which represents the flow of operations in treating honey with trehalose solution.

In order to prevent the honey crystallization and to maintain the texture corresponding to the fresh honey, the process according to the invention is used, which consists in the continuous addition in fresh honey of aqueous solutions of low concentration of trehalose. The successive phases of this process, related to an amount of 1 kg honey, consist of:
1. Weighing an amount of 1 kg honey;
2. Carried out at 25°C an aqueous solution having a concentration of 2% trehalose;
3. Continuous introduction, within a period of 20 minutes, of 12-15 ml trehalose solution of 2% concentration in the slow-stirred honey, with the agitator paddles peripheral speed of about 2 m/min. The volume of the solution and its concentration was calculated such that it does not exceed, according to the Official Journal of the European Communities, Annex II, Composition Criteria for Honey, point 2, moisture of 20%.
4. Storage of honey in the dark, in glass vessels, for a long period, of the order of the years, without taking place the crystallization and the modification of the textural properties.

### Sugar content

For the advanced characterization of the influence of the addition of trehalose in honey, several techniques of instrumental analysis have been used, as follows:
Tens of floral honey samples from different sources were analyzed chromatographically by HPLC 10 AD VP, Shimadzu, Japan, in terms of sugar content. Following the analyzes it was found that acacia honey, the one that crystallizes the hardest, with the average value of the ratio (glucose/fructose) G/F = 0.59, has the highest amount of trehalose, an average of 18.60g/ kg, and rapeseed honey, which quickly crystallizes with the average value of the ratio G/F = 1.31, has the smallest amount of trehalose, an average of 0.10g/kg. This confirms the connection between the amount of trehalose and the rate of crystallization.

### Texture properties

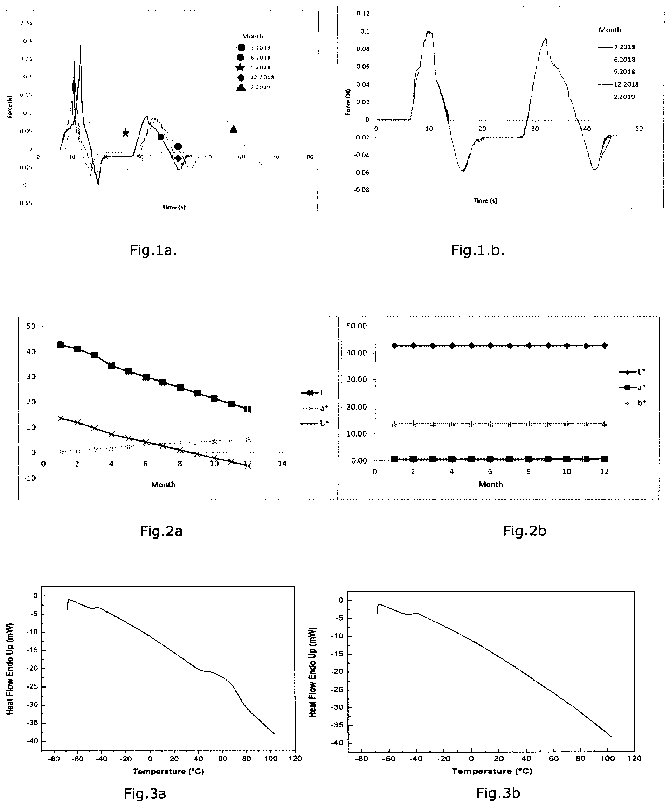

To determine texture properties, a texture profile analysis (TPA) is used with the appropriate data processing software. There are presented texture profiles obtained for a polyflorous honey without the addition of trehalose, Fig.1a and with the addition of trehalose, Fig.1b. The texture profile analysis (TPA) after one year looks like this:
At the honey sample without trehalose addition, Fig.1a, all the textural properties changed during the 12 months of the analysis. The hardness increased due to the formation of crystals glucose, elasticity decreased, cohesiveness increased, adhesiveness decreased, viscosity increased, chewability increased, gumminess increased.

In the sample with the addition of trehalose, Fig.1b, all the sizes that characterize the texture of the honey remained constant, during the analyzed period, demonstrating the efficiency of the addition.

### Color analyses

In order to determine the optical properties, the colorimetric method was used, using a Chromometer CR 410 - Konica Minolta and specialized software. The results of the CIELAB colorimetric analysis are shown in Fig.2a, for a polyflorous honey without addition of trehalose, and in Fig.2b with addition of trehalose. CIELAB color space has coordinates such as: L* -the lightness parameter; a* -the red / green parameter, with + a* indicating red and -a* indicating green; and b* -the yellow / blue parameter, with + b* indicating yellow and -b* indicating blue. The L*, a*, and b* coordinate axis define the three dimensional CIE color space.

The result of the color analysis of polyfloral honey is presented as follows: in the honey sample without addition of trehalose, Fig.2a, the color parameters varied, during 12 months, as follows: the L* luminosity decreases due to the appearance of glucose crystals, a* increases what corresponds to the color variation from reddish to slightly greenish yellow and b* decreases by shifting the color from yellow to slightly blue. The crystallized honey has become opaque and shows a waxy appearance. In the honey sample with the addition of trehalose, Fig.2b, the color parameters remained constant due to the influence of the trehalose which prevented the formation of crystals and the color change as a result of the crystallization of glucose.

### Thermal properties

Diferential scanning calorimetry (DSC 8500; Perkin Elmer) was used to investigate the thermal properties of different types of honey. The change in heat flow was analyzed from - 68.44°C to 102.76 °C (heating rate of 10° C/min) in dynamic inert nitrogen atmosphere, at a flow rate of 20 mL/min. The differential scanning calorimetry can detect most of the physical and chemical changes involving heat absorption or liberation.

In the honey sample without the addition of trehalose, Fig. 3a, in the area of positive temperatures there is a peak corresponding to the crystallization followed by one corresponding to the melting of the crystals, at the honey with the addition of the trehalose, Fig.3b, there is a peak corresponding to the crystallization at the negative temperatures, but throughout the range of positive temperatures honey is liquid, without phase transitions. The existence of peak in thermogram in Fig. 3a, at positive temperatures, corresponds to the melting of crystals in honey, and the fact that more than one peak is present in the thermogram, it shows that there are more than one type of crystals with different melting points in the honey sample.

## Claims

1. Method for preventing honey crystallization, **characterized in that** a diglucose is added to honey in a percentage of 0.03% to prevent honey crystallization, wherein said diglucose is trehalose.

2. Method for preventing honey crystallization, according to claim 1, **characterized in that**, for the purpose of adding trehalose to honey, a 2% trehalose solution is made at ambient temperature using pure water as a solvent.

3. Method for preventing honey crystallization, according to claim 1 or 2, **characterized in that** 12-15 ml of 2% trehalose solution are introduced under continuous, slow stirring, for 20 minutes, into one kilogram of honey.

4. Method for preventing honey crystallization, according to any one of claims 1 to 3, **characterized in that** the peripheral speed of the stirrer blades is about 2m/min.

## Patentansprüche

1. Verfahren zur Verhinderung der Honigkristallisation, **dadurch gekennzeichnet, dass** dem Honig eine Diglukose in einer Konzentration von 0,03% zugesetzt wird, um die Honigkristallisation zu verhindern, wobei es sich bei der Diglukose um Trehalose handelt.

2. Verfahren zur Verhinderung der Honigkristallisation nach Anspruch 1, **dadurch gekennzeichnet, dass** zum Zweck der Zugabe von Trehalose zu Honig eine 2%ige Trehaloselösung bei Umgebungstemperatur unter Verwendung von reinem Wasser als Lösungsmittel hergestellt wird.

3. Verfahren zur Verhinderung der Honigkristallisation nach Anspruch 1 oder 2, **dadurch gekennzeichnet, dass** 12-15 ml einer 2% igen Trehaloselösung unter kontinuierlichem, langsamem Rühren über 20 Minuten in ein Kilogramm Honig eingerührt werden.

4. Verfahren zur Verhinderung der Honigkristallisation nach einem der Ansprüche 1 bis 3, **dadurch gekennzeichnet, dass** die Umfangsgeschwindigkeit der Rührflügel etwa 2 m/min beträgt.

## Revendications

1. Méthode de prévention de la cristallisation du miel, **caractérisé en ce qu'**un diglucose est ajouté au miel à un pourcentage de 0,03 % pour prévenir la cristallisation du miel, ledit diglucose étant du tréhalose.

2. Méthode de prévention de la cristallisation du miel selon la revendication 1, **caractérisé en ce que**, pour ajouter du tréhalose au miel, une solution de tréhalose à 2 % est préparée à température ambiante en utilisant de l'eau pure comme solvant.

3. Méthode de prévention de la cristallisation du miel, selon la revendication 1 ou 2, **caractérisé en ce que** 12 à 15 ml d'une solution de tréhalose à 2 % sont introduits sous agitation lente et continue, pendant 20 minutes, dans un kilogramme de miel.

4. Méthode de prévention de la cristallisation du miel, selon l'une quelconque des revendications 1 à 3, **caractérisé en ce que** la vitesse périphérique des pales de l'agitateur est d'environ 2 m/min.
